# EUROPÄISCHE PATENTANMELDUNG

(11) **EP 1 589 523 A2**
(43) Veröffentlichungstag der Anmeldung: **26.10.2005**
(21) Anmeldenummer: 05002573.3
(22) Anmeldetag: 08.02.2005
(51) Int. Cl.: G10K 11/16

(54) **Vorrichtung zum Abschirmen, Dämmen und/oder Dämpfen von Schall und Verfahren zur Herstellung derselben**

(30) Priorität: 20.04.2004 DE 102004019055
(71) Anmelder: AKsys GmbH, 67547 Worms (DE)
(72) Erfinder: Seidel, Manfred, Dr.-Ing., 33824 Werther (DE); Jording, Norbert, 32257 Bünde (DE)
(74) Vertreter: Müller, Hans-Jürgen

(57) **Zusammenfassung**

Bei einer Vorrichtung zum Abschirmen, Dämmen und/oder Dämpfen von Schall mit mindestens einer Platte (1) oder Schicht, die mit vielen schlitzartigen Durchbrechungen bzw. Schlitzen (3) versehen ist, die sich im Bereich von Erhebungen (2) und/oder Vertiefungen (2a) der Platte befinden, sind die Schlitze (3) derart gekrümmt, dass sich mindestens ein Schlitz (3) auf einer gekrümmten insb. geschlossenen Kurve (13) befindet; ein Krümmungsradius (r) der Schlitze (3) zwischen 0,5 und 5 mm wird bevorzugt.

## Beschreibung

Die Erfindung bezieht sich auf eine Vorrichtung zum Abschirmen, Dämmen und/oder Dämpfen von Schall, darunter sogen. "Schallabsorber", gemäß dem Oberbegriff des Patentanspruchs 1 sowie auf ein Verfahren zu deren Herstellung.

Vorrichtungen dieser Gattung sind bereits bekannt (DE 101 47 645 A1). Bei der bekannten Vorrichtung werden aus der flächenförmigen Platte oder Schicht insb. durch Walzverfahren Erhöhungen herausgepresst und Vertiefungen eingedrückt, die von oben bzw. unten gesehen an ihrer abgeflachten Außenseite eine Rechteckform aufweisen. An den Seitenwänden dieser Erhebungen und Vertiefungen sind schlitzartige Durchbrechungen angeordnet.

Darüber hinaus ist es auch bekannt (EP 0 149 844), mit derartigen Erhöhungen und Vertiefungen ohne Schlitze versehene Platten herzustellen, bei denen sich die Erhöhungen und Vertiefungen durch sich kreuzende Wellenzüge ergeben, die sich jeweils quer zur Platten- bzw. Schichtenebene hinziehen und der Platte das Aussehen eines sogen. "Eierkartons" verleihen.

Der Erfindung liegt die Aufgabe zugrunde, eine Vorrichtung der eingangs genannten Gattung dahingehend zu verbessern, dass sie bei guten Schallabschirm-, Schalldämmungs- und Schalldämpfungseigenschaften auch gut verformbar ist, um beispielsweise gerundete Teile, wie sie insb. in der Kraftfahrzeugtechnik Anwendung findet, ohne Gefahr eines Einreißens an solchen stark gekrümmten Bereichen formen zu können.

Die Erfindung ist im Anspruch 1 gekennzeichnet und in Unteransprüchen sind weitere Ausbildungen derselben beansprucht. Darüber hinaus sind in der folgenden Beschreibung und in den Zeichnungen besonders bevorzugte Beispiele der Erfindung näher beschrieben und dargestellt.

Gemäß der Erfindung verlaufen die Schlitze nicht geradlinig, sondern befinden sich Schlitze auf einer gekrümmten Kurve, insb. einer geschlossenen Kurve. Bevorzugt befinden sich zwei, drei oder mehr Schlitze auf einer kreisförmigen, elliptischen oder ovalen Kurve, jeweils im Abstand voneinander, wie dies auch anhand der Zeichnung noch besser veranschaulicht wird. Dabei empfiehlt sich ein Radius der gekrümmten Schlitze zwischen 0,5 und 5 mm insb. zwischen 1 und 2 mm.

Die Schlitzlänge sollte sich im Winkelbereich β längs der insb. geschlossenen Kurve im Bereich zwischen 20° und 120° befinden.

Sofern drei Schlitze längs der geschlossenen Kurve verwendet sind, sollten diese um einen Winkel α von etwa 120° voneinander versetzt sein. Bei der Verwendung von nur zwei Schlitzen längs der Kurve sollte der Versetzungswinkel α 180° betragen.

Der von der geschlossenen Kurve umschriebene Bereich der Platte oder Schicht ist zumindest teilweise aus der Ebene der Platte bzw. Schicht herausgeformt und bildet dadurch die betreffende Erhebung oder Vertiefung. Diese Erhebungen und Vertiefungen stellen eine Art "Deckel" dar, der durch die betreffenden Stege zwischen den Schlitzen im Abstand von dem die Erhebung und Vertiefung umgebenden Plattenbereich gehalten wird und über die zwischen den Schlitzen längs der Kurve gelegene Platten- bzw. Schichtteile bzw. Stege aber in Verbindung mit dem umgebenden Platten- bzw. Schichtbereich verbleibt. Im Extremfall genügt auch die Verwendung nur eines einzigen gekrümmten Schlitzes, so dass diese "Deckel" an denjenigen Randteilen, welche den Schlitz begrenzen, am weitesten aus der Plattenebene herausgedrückt ist, wodurch sich eine gegenüber der Plattenebene geneigte Deckelebene ergibt.

Mittels der erfindungsgemäßen Ausbildung lässt sich die Bruchdehnung bei z.B. Aluminium bis auf Werte zwischen 6% und 12% erhöhen.

Bevorzugt sind die Erhebungen bzw. Vertiefungen kugelkalottenartig aus der Plattenebene herausgeformt bzw. in die Richtung zur Platten-Mittenebene hineingeformt.

Die Erfindung ist auch anwendbar auf Platten oder Schichten mit Wellenstrukturen, bei denen sich im wesentlichen parallele Wellenberge und Wellentäler abwechseln. Gemäß dem o. g. Stand der Technik nach EP 0 149 844 kann die Platte oder Schicht auch zwei Wellenzüge aufweisen, die sich im Winkel zwischen 45° und 135° kreuzen. Dabei wird jedoch bevorzugt ein in etwa sinusförmiger Verlauf der Wellen angewendet.

Für die Dicke d der Platte oder Schicht empfiehlt sich ein Bereich von 0,01 bis 50 mm und ein bevorzugter Unterbereich zwischen 0,2 und 0,8 mm. Die Schlitzbreite sollte zwischen 0,01 und 2 mm, insb. zwischen 0,05 und 0,3 mm betragen.

Bei dem erfindungsgemäßen Verfahren wird zum Ausformen des von der Kurve gebildeten Deckels, also Erhebungsbereichs oder Vertiefungsbereichs, ein Verformungsstempel verwendet, dessen Begrenzungsfläche im wesentlichen dem Verlauf der Kurve entspricht. Dabei empfiehlt sich die Verwendung eines Verformungsstempels, bei dem zur Bildung der Schlitze mindestens Teile der Begrenzungsfläche Stanzkanten bilden.

Nach einer bevorzugten Ausbildung des erfindungsgemäßen Verfahrens wird die im Querschnitt gewellte Platte oder Schicht nach dem Schlitzbilden noch weiterverformt beispielsweise zu einer Struktur, wie sie schematisch in Figur 9 dargestellt ist, wobei die Oberfläche des Formwerkzeuges zur Herstellung des in Figur 9 dargestellten Teiles im Regelfall die Deckel nicht berührt, da sie zur Plattenmittenebene hin eingestanzt bzw. eingeprägt sind. Dadurch behalten die Deckel relativ zu benachbarten Bereichen der Platte ihre Position weitestgehend bei. Hierdurch wird die Schlitzbreite und dadurch auch die akustische Wirksamkeit der Vorrichtung bei einer Formgebung in einem Formwerkzeug nur geringfügig beeinflusst.

Es hat sich gezeigt, dass die Gefahr des Auf- und Weiterreißens der Platte oder Schicht ausgehend von den Enden der Schlitze insb. bei einem solchen nachträglichen Verformen gegenüber geradlinigen Schlitzen erheblich vermindert ist. Dies dürfte auf die reduzierte Kerbwirkung zurückzuführen sein, die beim Stanzen der Schlitze entsteht. Maßgebend hierfür dürfte der Kurvenradius sein, weshalb ein solcher Radius r zwischen 1 und 2 mm bevorzugt wird, aber auch zwischen 0,5 und etwa 5 mm angewendet werden kann. Die erfindungsgemäß "Ringsegmentperforation" löst daher die der Erfindung zugrunde liegende Aufgabe besonders gut.

In der Zeichnung sind Ausführungsbeispiele für die Erfindung schematisch dargestellt. Dabei zeigen:
- Figur 1a: die Aufsicht auf einen Teil einer erfindungsgemäßen Vorrichtung und
- Figur 1b bis 1c: Schnittbilder von Figur 1;
- Figur 2a: eine vergrößerte Aufsicht auf einen Plattenteil im Bereich einer Erhebung und
- Figur 2b: einen Teilschnitt A-A durch den in Figur 2a gezeigten Plattenteil;
- Figur 3: schematisch eine Seitenansicht auf eine gewellte, d.h. mit einem Wellenzug versehene und geschlitzte Platte leicht schräg von oben, wobei in dieser Figur die Variante einer Platte mit einer sinusförmigen Wellenstruktur in nur einer Richtung dargestellt ist;
- Figur 4: eine Aufsicht auf eine mit zwei Wellenzügen versehene Platte in Schrägansicht;
- Figur 5: eine Aufsicht auf eine Erhebung mit einem kreisförmigen Verlauf der Kurve und
- Figur 6: eine entsprechende Aufsicht auf eine Erhebung mit einem elliptischen Verlauf der Kurve;
- Figur 7a: einen schematischen Querschnitt durch ein schlitzbildendes Verformungswerkzeug,
- Figur 7b: ein Schnittbild von Figur 7a und
- Figur 8: ein gem. der Erfindung ausgebildetes Fertigteil, das als Kfz-Einbauteil zum Abdecken eines Teils des Motors dient.

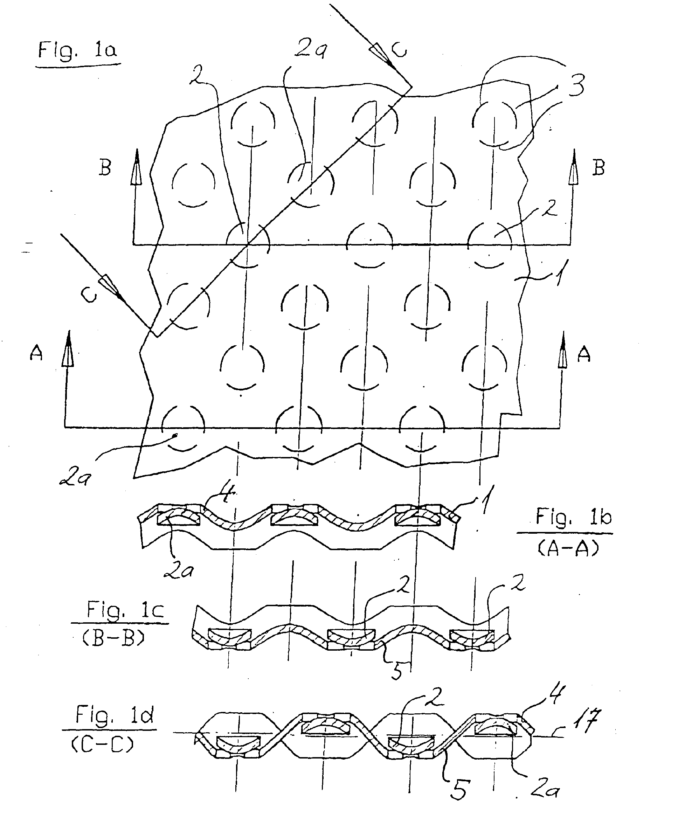

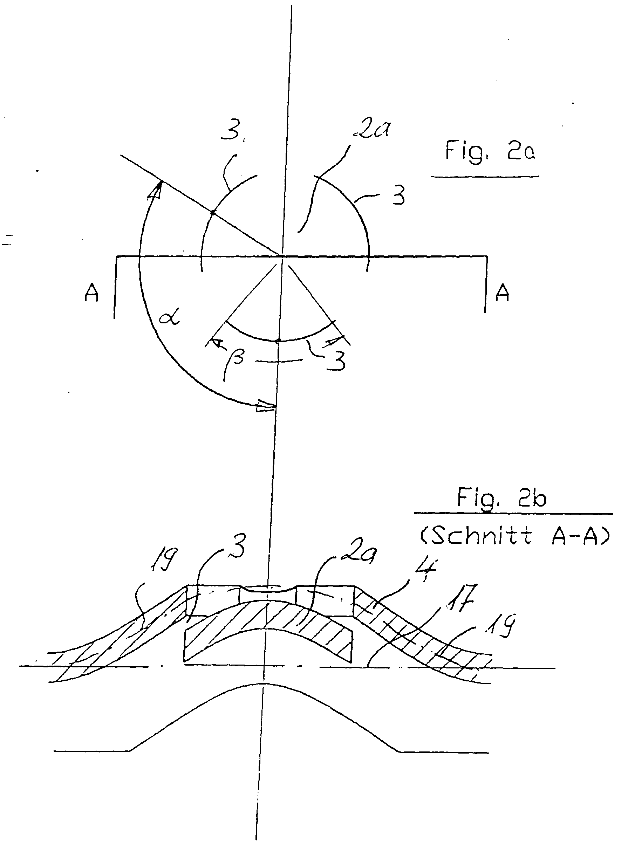

Gemäß Figuren 1a bis 1d ist eine gewellte Platte 1 aus Aluminium mit in Draufsicht kreisförmigen Erhebungen 2 und Vertiefungen 2a versehen, bei denen die kreisringförmigen Begrenzungsränder der Erhebungen 2 und Vertiefungen 2a -wie in Figuren 2a/2b vergrößert dargestellt ist- mit drei Schlitzen 3 versehen sind, die um den Winkel α von 120° gegeneinander versetzt sind. Die Dicke d der Platte 1 beträgt bei diesem Beispiel 0,5 mm. Bei der Ausbildungsform von Figuren 1a und 1b mit längs der gewellten Plattenebene 19 wellenförmigem Querschnittsverlauf der Platte 1 befinden sich die Erhebungen 2 jeweils in den Wellentälern 5 und die Vertiefungen 2a in den Wellenbergen 4. Bei der Ausformung der deckelartigen Erhebungen 2 und Vertiefungen 2a wird hier dafür gesorgt, dass die Vertiefungen 2a von den Wellenbergen 4 ausgehend ein Stück weit nach innen in Richtung zur Neutralebene oder Mittelebene 17 der Platte 1 und die Erhebungen 2 ihrerseits ebenfalls gegenüber der Gruppe der Wellentäler 5 ein Stück weit nach innen wiederum in Richtung zur Mittenebene 17 der Platte 1 eingedrückt sind unter entsprechender Schlitzbildung an deren abgerundeten Rändern. Diese bevorzugte Ausbildung der Erfindung erleichtert das nachträgliche Verformen, beispielsweise beim Zusammendrücken eines Oberwerkzeugs und eines Unterwerkzeugs, zwischen denen die erfindungsgemäß ausgebildete Platte 1 etwas zusammengedrückt wird. Auch bei Zugbeanspruchungen ausgesetztem Umformen hat sich diese Ausbildung mit jeweils in Bezug auf den Querschnittsverlauf der Wellenzüge zurückgesetzten deckelartigen Erhebungen 2 und Vertiefungen 2a als besonders günstig erwiesen.

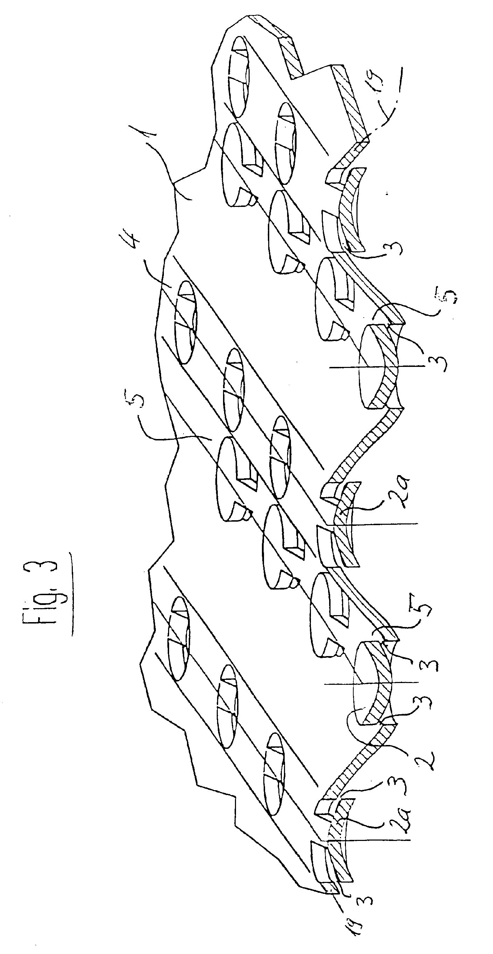

Gemäß Figur 3 ist die Platte 1 wellenförmig verformt, wobei hier nur die Variante mit wellenförmiger Verformung in nur einer Richtung (parallele Wellenzüge) dargestellt ist. Dabei befinden sich längs der "Wellenberge" 4 jeweils im Abstand voneinander Vertiefungen 2a, während längs der "Wellentäler" 5 Erhebungen 2 angeordnet sind. In beiden Fällen sind die Erhebungen 2 und Vertiefungen 2 aus der gewellten Plattenebene 19 in Richtung zur Platten-Mittenebene 17 eingedrückt. Diese ist die "Symmetrie-Ebene" in der Mitte der gewellten oder anderweitig verformten Platte 1.

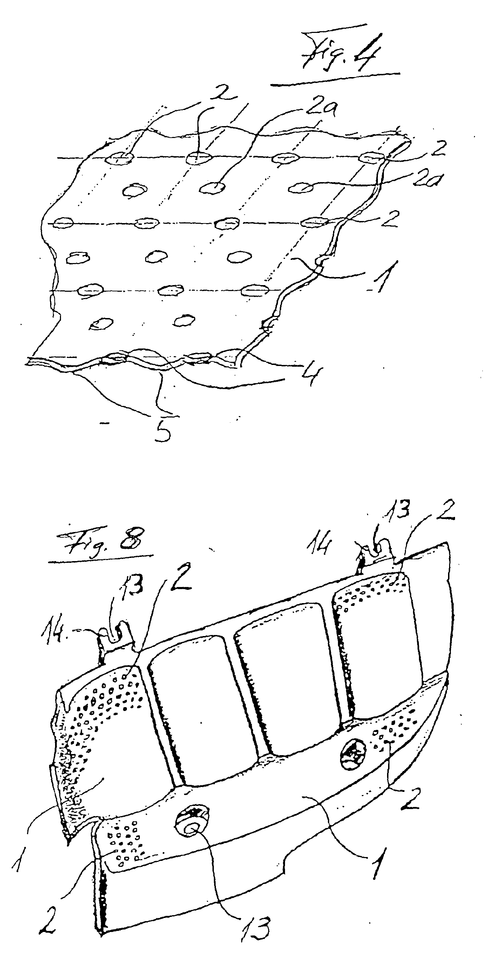

Entsprechend sind bei der Platte 1 von Figur 4, die im rechten Winkel aufeinander gerichtete Wellenzüge aufweist, an dem am weitesten aus der Plattenebene herausgehobenen Wellenbergen 4 Vertiefungen 2a und in den am weitesten aus der Plattenebene in entgegengesetzter Richtung "hineingedrückten" Tälern 5 Erhebungen 2 mit jeweils ellipsenförmigen Begrenzungsrändern verteilt.

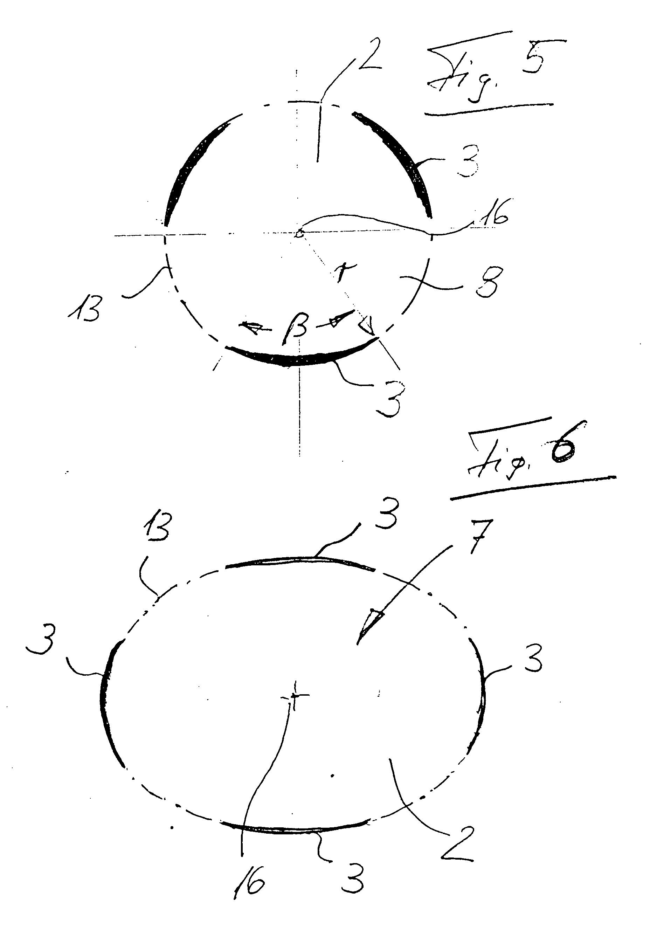

Gemäß Figur 5 wird die Erhebung 2 von einer kreisförmigen Kurve 13 begrenzt. Dabei sind entlang der Kurve 13 drei Schlitze 3 um α von jeweils 120° zueinander versetzt angeordnet; die Länge der Schlitze 3 nimmt jeweils einen Winkel β von etwa 80° ein.

Gemäß Figur 6 wird die Erhebung 2 von einer ellipsenförmigen Kurve 13 begrenzt, längs derer vier Schlitze 3 jeweils um 90° gegeneinander versetzt angeordnet sind.

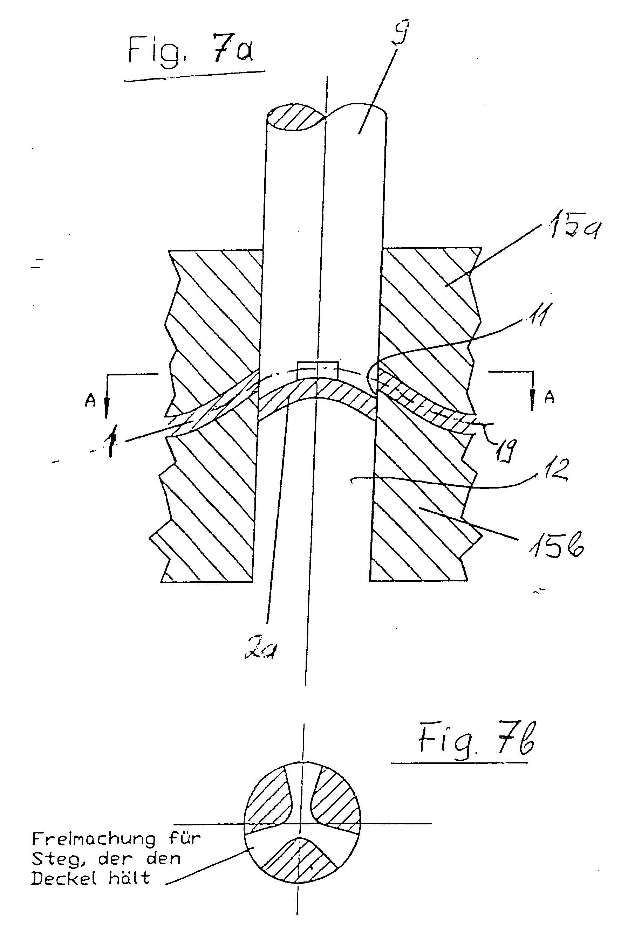

Gemäß Figuren 7a und 7b wird eine Vertiefung 2a dadurch aus der Ebene 19 der Platte 1 unter Bildung von Schlitzen 3 herausgedrückt, dass der unterbrochene Stanzstempel des Verformungswerkzeugs 9 Stanzkanten 11 aufweist, so dass Randteile der Vertiefungen 2a in die Vertiefungen 12 des Unterteils 15b der Matrize unterhalb dessen Oberteil 15a hineingedrückt und hineingestanzt werden können. Die Breite B des Stanzstempels 9 entspricht dem zweifachen Radius bzw. dem Durchmesser einer kreisförmigen Kurve 13 nach beispielsweise Figur 5.

Das als Motorabdeckung dienende Schallschutzelement gem. Figur 8 ist aus einem mit einem Vlies bedeckten Blech aus Aluminium mit einer Schichtdicke des Bleches von d = 0,5 mm ausgebildet. Über weite Teile der Fläche der Platte 1 sind rasterartig Erhebungen 2 verteilt, die jeweils gekrümmte Ränder haben, längs derer die oben erwähnten Schlitze verlaufen. Die größeren Löcher und Aussparungen 13 dienen zum Befestigen des Schallschutzelements am Chassis des Kraftfahrzeuges beispielsweise durch Verwendung von Schrauben. Das Schallschutzelement ist eine dreidimensional verformte Platte 1, die gem. den Formationen des Motorgehäuses geformt ist und Außenflansche 14 aufweist.

Die Art der geschlossenen Kurve, längs derer Schlitze angeordnet sind, ist nicht auf Kreise und Ellipsen beschränkt; auch ein Vieleck kann eine solche geschlossene Kurve bilden.

Das Einstanzen bzw. Einprägen der Schlitze kann als separater Herstellungsschritt, aber auch in Endphase des Verformens der Platte zur Wellenstruktur erfolgen.

Für das Verformen der Platte oder Schicht empfiehlt sich die Verwendung konturierter bzw. profilierter Walzen. Statt dessen kann das Verformen auch durch ein Presswerkzeug erfolgen. Dabei kann die Einstanztiefe des Verformungsstempels durch Unterlegen von unterschiedlich dicken Blechen gesteuert werden.

Falls die Vorrichtung nicht auf der gesamten verformten Plattenfläche geschlitzt werden soll, empfiehlt es sich, einzelne Segmente von schlitzbildenden Verformungsstempeln während des Plattenverformens beispielsweise pneumatisch abzuschalten, so dass dort zwar die Wellenstruktur verbleibt, aber keine Erhebungen bzw. Vertiefungen und daher auch keine Schlitze an den betreffenden Plattenstellen entstehen.

## Patentansprüche

1. Vorrichtung zum Abschirmen, Dämmen und/oder Dämpfen von Schall mit mindestens einer Platte (1) oder Schicht einer Dicke (d) zwischen 0,01 und 50 mm, die viele schlitzartige Durchbrechungen bzw. Schlitze (3) einer Schlitzbreite zwischen 0,001 und 2 mm aufweist, bei der sich Schlitze im Bereich von Erhebungen (2) und/oder Vertiefungen (2a) der Platte (1) befinden,
**dadurch gekennzeichnet,**
**dass** die Schlitze (3) derart gekrümmt verlaufen, dass sich mindestens ein Schlitz (3) auf einer gekrümmten insb. geschlossenen Kurve (13) befindet.

2. Vorrichtung nach Anspruch 1,
**dadurch gekennzeichnet,**
**dass** sich die Mittelpunkte (16) der geschlossenen Kurven (13) jeweils an den Stellen von Erhebungen (2) und Vertiefungen (2a) befinden und dass die Schlitze (3) durch Eindrücken bzw. Einstanzen von Erhebungen (2) nach unten, d.h. in Richtung zur Mittelebene (17) der Platte (1) und von Vertiefungen (2a) nach oben, d.h. in Richtung der Mittelebene (17) der Platte (1) aus dem Plattenmaterial herausgebrochen bzw. herausgestanzt sind.

3. Vorrichtung nach Anspruch 1,
**dadurch gekennzeichnet,**
**dass** die Erhebungen (2) bzw. Vertiefungen (2a) kalottenartig aus der Ebene der Platte (1) herausgeformt sind.

4. Vorrichtung nach einem der vorhergehenden Ansprüche,
**dadurch gekennzeichnet,**
**dass** das Schlitzflächenverhältnis zwischen 0,001 und 8% beträgt.

5. Vorrichtung nach einem der vorhergehenden Ansprüche,
**dadurch gekennzeichnet,**
**dass** die geschlossene Kurve (13) ein Kreis ist.

6. Vorrichtung nach einem der Ansprüche 1 bis 4,
**dadurch gekennzeichnet,**
**dass** die geschlossene Kurve (13) eine Ellipse ist.

7. Vorrichtung nach einem der Ansprüche 1 bis 4,
**dadurch gekennzeichnet,**
**dass** die geschlossene Kurve ein Vieleck bildet.

8. Vorrichtung nach einem der vorhergehenden Ansprüche,
**dadurch gekennzeichnet,**
**dass** sich Schlitze (3) über einen Winkel β der insb. geschlossen Kurve (13) im Bereich von 20° bis 120° erstrecken.

9. Vorrichtung nach einem der vorhergehenden Ansprüche,
**dadurch gekennzeichnet,**
**dass** die Platte (1) oder Schicht im Querschnitt gewellt ist und im wesentlichen parallele Wellenberge (4) und Wellentäler (5) aufweist.

10. Vorrichtung nach Anspruch 9,
**dadurch gekennzeichnet,**
**dass** die Platte (1) oder Schicht zwei Wellenzüge aufweist, die sich im Winkel von 45° bis 135° kreuzen.

11. Vorrichtung nach einem der vorhergehenden Ansprüche,
**dadurch gekennzeichnet,**
**dass** die Schlitze (3) um einen Winkel α von etwa 180° voneinander auf der Kurve (13) versetzt sind.

12. Vorrichtung nach einem der Ansprüche 1 bis 10,
**dadurch gekennzeichnet,**
**dass** die Schlitze (3) um einen Winkel α von etwa 120° voneinander auf der Kurve (13) versetzt sind.

13. Vorrichtung nach einem der vorhergehenden Ansprüche,
**dadurch gekennzeichnet,**
**dass** die Schlitze (3) einen Radius (r) zwischen 0,5 und 5 mm aufweisen.

14. Verfahren zur Herstellung einer Vorrichtung nach einem oder mehreren der vorhergehenden Ansprüche, bei dem die Platte (1) bzw. Schicht in eine Wellenstruktur verformt und Schlitze (3) aus der Platte (1) bzw. Schicht ein- bzw. ausgestanzt oder herausgebrochen bzw. eingeprägt werden,
**dadurch gekennzeichnet,**
**dass** zum Einstanzen, Einprägen oder dergleichen Schlitzbilden ein Stanz-, Präge- oder dergleichen Verformungsstempel (9) verwendet wird, dessen Begrenzungsfläche im wesentlichen den Verlauf der Kurve (13) definiert, und dass die Schlitzbildung an Rändern von Erhebungen (2) bzw. Vertiefungen (2a) vorgenommen wird, die von einer Kurve (13) umschlossen sind.

15. Verfahren nach Anspruch 14,
**dadurch gekennzeichnet,**
**dass** das Einstanzen, Einprägen oder Schlitzbilden als separater Herstellungsschritt vorgenommen wird.

16. Verfahren nach Anspruch 14,
**dadurch gekennzeichnet,**
**dass** das Einstanzen, Einprägen oder dergleichen Schlitzbilden während der letzten Phase des Verformens der Platte (1) zur Wellenstruktur vorgenommen wird.

17. Verfahren nach einem der Ansprüche 14 bis 16,
**dadurch gekennzeichnet,**
**dass** ein Verformungsstempel (9) verwendet wird, bei dem zur Bildung der Schlitze (3) mindestens Teile der Begrenzungsfläche Stanzkanten (11) bilden, und dass der Verformungsstempel (9) in eine Matrize (15a, 15b) eingeführt wird.

18. Verfahren nach einem der Ansprüche 14 bis 17,
**dadurch gekennzeichnet,**
**dass** eine im Querschnitt gewellte Platte (1) oder Schicht nach dem Schlitzbilden z.B. in Presswerkzeugen weiterverformt wird.

19. Verfahren nach einem der Ansprüche 14 bis 18,
**dadurch gekennzeichnet,**
**dass** die Platte (1) bzw. Schicht mittels konturierter bzw. profilierter Walzen verformt wird.

20. Verfahren nach einem der Ansprüche 14 bis 19,
**dadurch gekennzeichnet,**
**dass** die Platte (1) bzw. Schicht in einem Presswerkzeug zur Wellenstruktur geformt wird und dass die Einstanztiefe der Verformungsstempel (9) durch Unterlegen von unterschiedlich dicken Blechen gesteuert wird.

21. Verfahren nach einem der Ansprüche 14 bis 20,
**dadurch gekennzeichnet,**
**dass** einzelne Verformungsstempel (9) während der Verformung der Platte (1) bzw. Schicht z.B. pneumatisch abgeschaltet werden, so dass die Platte (1) bzw. Schicht dort ungeschlitzt bleibt.
